(19) **Europäisches Patentamt**

**European Patent Office**

**Office européen des brevets**

(11) **EP 0 863 665 B1**

(12) **EUROPEAN PATENT SPECIFICATION**

(45) Date of publication and mention
of the grant of the patent:
**10.09.2003 Bulletin 2003/37**

(51) Int Cl.7: **H04N 5/14**

(21) Application number: **97301531.6**

(22) Date of filing: **07.03.1997**

(54) **Video display monitor**

Videoanzeigemonitor

Moniteur d'affichage vidéo

(84) Designated Contracting States:
**DE FR GB**

(43) Date of publication of application:
**09.09.1998 Bulletin 1998/37**

(73) Proprietor: **MATSUSHITA ELECTRIC INDUSTRIAL CO., LTD.**
**Kadoma-shi, Osaka 571-8501 (JP)**

(72) Inventors:
• **Kameoka, Fumiou, No. 105 Apple House**
**Higashi-ku, Sapporo-shi, Hokkaido 065 (JP)**
• **Funamoto, Taro**
**Sapporo-shi, Hokkaido 004 (JP)**

• **Hatano, Takahisa**
**Shiroisha-ku, Sapporo-shi, Hokkaido 003 (JP)**
• **Shindo, Yoshikuni, No. 202 Ebisu House**
**Higashi-ku, Sapporo-shi, Hokkaido 065 (JP)**

(74) Representative: **Crawford, Andrew Birkby et al**
**A.A. Thornton & Co.**
**235 High Holborn**
**London WC1V 7LE (GB)**

(56) References cited:
• **PATENT ABSTRACTS OF JAPAN vol. 97, no. 3, 31 March 1997 & JP 08 287244 A (HITACHI), 1 November 1996,**

## Description

Field of the Invention

The present invention relates to the field of video display monitors and, more particularly, to video display monitors employing image interpolation in digital signal processing.

Background of the Invention

Conventional video display monitors employing image interpolation in digital signal processing apply a specific interpolation coefficient for interpolation.

Although it is known that a standard function of sinx/x is ideal for deciding an interpolation coefficient, linear interpolation has been adopted in order to simplify hardware configuration.

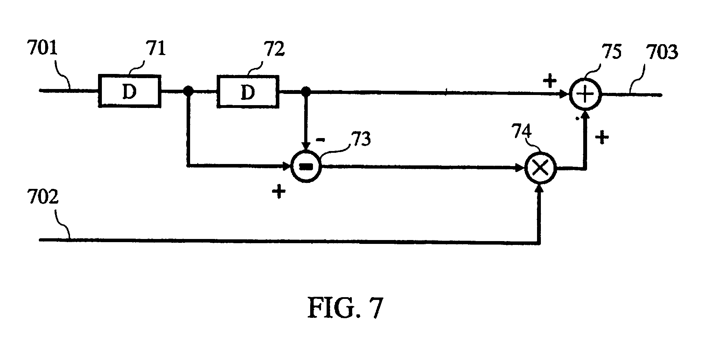

One conventional technology is explained below with reference to Fig. 7.

A digital video input signal 701, such as a luminance signal, from the outside, changes in accordance with a clock pulse. The digital video input signal 701 is delayed by delay circuits 71 and 72 as set by the clock pulse equivalent to an interpolating picture element. A subtractor 73 subtracts the output signal of the delay circuit 72 from the output signal of the delay circuit 71, and produces the output of the difference in signal levels; or in other words, the difference in signal levels of adjacent picture elements. A multiplier 74 multiplies the above-mentioned difference in the signal levels by an interpolation coefficient 702, specifying an interpolation point which is input from the outside, and produces an interpolation signal. An adder 75 adds the output signal of the delay circuit 72 and the output signal of the multiplier 74, and produces a video output signal 703. Since this video output signal 703 is the result of the difference in the signal levels of the adjacent picture elements multiplied by the interpolation coefficient specifying the interpolation point, it can be said that the conventional technology employs linear interpolation.

Using the above system, however, images such as text lose sharpness because they have large difference in signal levels of picture elements. Linear interpolation of such images results in sloped signal edges. If, for example, a step function which is advantageous for interpolating signals for text and the like, is applied to the interpolation coefficient, images of objects such as lamps, for example, acquire jagged edges because they have signal levels with shallow slopes. Moreover, images such as every other vertical or horizontal line comprising high frequency signals may produce a large beat.

JP-A-08287244 discloses an interpolation arrangement for video pixels in which a first, linear interpolation function is used when the gradation difference between adjacent pixels is lower than a predetermined threshold, and a second interpolation function is used when the difference is greater.

Summary of the Invention

The below defined arrangements of the present invention aim to provide a video display monitor which 1) reduces beating of images comprising high frequency signals, 2) maintains sharpness in images like text whose signals have a large difference in signal levels of picture elements, and 3) assures smoothness of images, such as lamps, whose signals have a small difference in signal levels.

In particular the present invention provides a method for displaying a video signal on a video display monitor, said method comprising the steps of:

> detecting a difference in signal levels of adjacent picture elements of said video signal;
> interpolating said adjacent picture elements to provide an interpolating picture element, the method used for said interpolating being dependent on the magnitude of said difference in signal levels; and;
> displaying the interpolated video signal on said video display monitor;

characterised in that said video signal is a digital video signal and when said difference in signal levels of said adjacent picture elements is greater than a predetermined value, said interpolating is done on the basis of a converted interpolation coefficient K' derived from an input interpolation coefficient K, K = 0 to 1, where K' = 0.5 cosine $(\Pi + \Pi K) + 0.5$, and said difference in signal levels of said adjacent picture elements.

The present invention therefore employs the cosine function which is particularly effective for images comprising high frequency signals such as every other vertical or horizontal line, for example. Application of the cosine function to nonlinear interpolation enables reduction of beating of images comprising high frequency signals.

Preferably, when the difference in the signal level differences exceeds a predetermined value, a signal for nonlinear interpolation (step) is produced. When the difference is below the predetermined value, a linear interpolation signal is produced. Nonlinear interpolation thereby maintains the sharpness of images, such as text, comprising large difference in signal levels of picture elements. At the same time, linear interpolation assures the smoothness of images of objects such as lamps, for example, comprising small differences in signal levels.

The invention also provides a method for displaying a video signal on a video display monitor, said method using interpolation of a new picture element of the video signal between adjacent picture elements of the digital video input signal, said method comprising the steps of:

detecting a difference in signal levels of said adjacent picture elements; and

displaying an interpolated video signal on said video display;

characterised in that said video signal is a digital video signal and said interpolating is done on the basis of a converted interpolation coefficient K' derived from an input interpolation coefficient K, K = 0 to 1 where K' = 0.5 cosine ($\Pi$ + $\Pi$K) + 0.5, and said detected difference.

The present invention further relates to a video display monitor for use with a digital video signal comprising:

delay means for delaying the digital video signal to produce a delayed digital video signal;

operation means for calculating a difference in signal levels of the digital video signal and the delayed digital video signal,

conversion means for converting an input interpolation coefficient K, K = 0 to 1 into a converted interpolation coefficient K' based on

i) the equation K' = 0.5 cosine ($\Pi$ + $\Pi$K) + 0.5, and

ii) said difference in signal levels calculated by said operation means;

multiplication means for multiplying an output signal of said conversion means by an output signal of said operation means.;

addition means for adding an output signal of said multiplication means and an output signal of said delay means; and

display means for displaying an output signal of said addition means.

The present invention further relates to a video display monitor for use with a digital video signal comprising:

first delay means for delaying the digital video signal;

second delay means for further delaying an output signal of said first delay means;

first operation means for calculating a first difference in the output signal of the first delay means and an output signal of the second delay means;

third delay means for further delaying an output signal of said first operation means:

second operation means for calculating a second difference in the output signal of said first operation means and an output signal of said third delay means;

determining means for determining an absolute value of an output signal of said second operation means;

selection means for converting an input interpolation coefficient K, K = 0 to 1, into a converted interpolation coefficient K', where K' = 0.5 cosine ($\Pi$ + $\Pi$K) + 0.5;

multiplication means or multiplying an output of said selection means by the output of said third delay means;

fourth delay means for further delaying the output signal of said second delay means;

addition means for adding an output signal of said fourth delay means and an output signal of said multiplication means; and

display means for displaying an output signal of said addition means. The present invention finally relates to a video display monitor for use with a digital video signal comprising:

first delay means for delaying the digital video signal;

second delay means for further delaying an output of said first delay means;

operation means for calculating the difference in the output signal of said first delay means and an output signal of said second delay means;

selection means for converting an input interpolation coefficient K, K = 0 to 1, into a converted interpolation coefficient K', where K' = 0.5 cosine ($\Pi$ + $\Pi$K) + 0.5;

multiplication means for multiplying an output of said selection means by an output of said operation means;

addition means for adding the output signal of said second delay means and an output signal of said multiplication means; and

display means for displaying an output signal of said addition means.

Brief Description of the Drawings

Fig. 1 is a block diagram of a video display monitor of a first exemplary embodiment of the present invention.

Fig. 2 is a conceptual drawing of linear interpolation.

Fig. 3 is a conceptual drawing of nonlinear interpolation (step).

Fig. 4 is a block diagram of a video display monitor employing the cosine function of a second exemplary embodiment of the present invention.

Fig. 5 is a graph illustrating a cosine interpolation table.

Figs. 6A-6D show a 5/4 interpolation when every other vertical line (horizontal line) is interpolated using a range of interpolation methods.

Fig. 7 is a block diagram of a conventional video display monitor.

## Description of the Preferred Embodiments

First exemplary embodiment

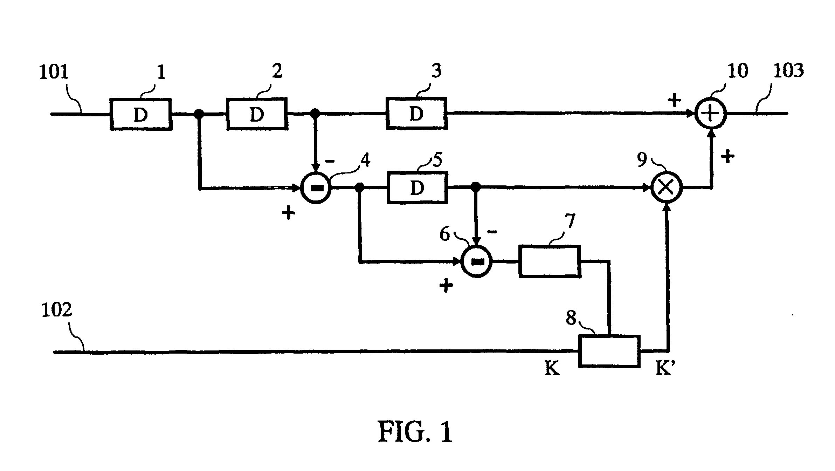

In Fig. 1, a video input signal 101 such as a digital luminance signal is input from an external source. Video input signal 101 is delayed by delay circuit 1 in accordance with a clock pulse equivalent to a picture element to be interpolated. Delay circuit 2 further delays the signal for one picture element, and delay circuit 3 delays the signal for one more picture element. Subtractor 4 subtracts the output of delay circuit 2 from the output of delay circuit 1. In other words, the difference in signal levels of adjacent picture elements is output by subtractor 4. Delay circuit 5 delays the output signal of the difference in signal levels for one picture element. Subtractor 6 subtracts the output signal of delay circuit 5 from the signal of the difference in signal levels. In other words, the difference in the signal level differences of respective adjacent picture elements is detected and output from subtractor 6. Absolute value detecting circuit 7 outputs the absolute value of the signal of the difference in the signal level differences. An interpolation coefficient K which is input from an external source is between 0 and 1 is related to the interpolation point. Decoder 8 selects and outputs an appropriate interpolation coefficient K' (either linear interpolation or nonlinear interpolation; K'= 0 to 1) based on the interpolation coefficient K which has been input and the absolute value of interpolation coefficient K. Multiplier 9 multiplies the output signal of delay circuit 5 by the appropriate interpolation factor K'output from decoder 8. Adder 10 adds the output of delay circuit 3 and the output of multiplier 9 to produce video output signal 103.

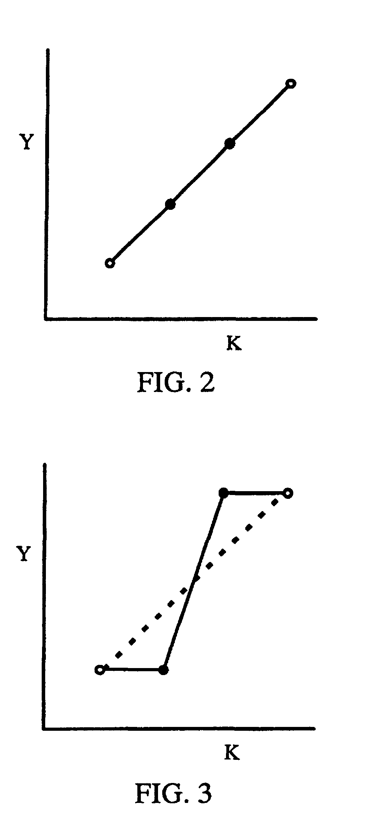

How decoder 8 in Fig. 1 converts an interpolation coefficient from K to K' is described below with reference to Figs. 2 and 3.

Fig. 2 illustrates an example of linear interpolation. The position of adjacent picture elements is plotted along abscissa K and the luminance signal level along ordinate Y. White circles indicate unprocessed signals of two adjacent picture elements, and black circles indicate interpolated signals. Unprocessed signals of the two adjacent picture elements are linearly connected and interpolated by adding two additional picture elements in between. By the use of linear interpolation, unprocessed signals are converted into smoother signals.

Fig. 3 illustrates an example of step interpolation which involves nonlinear interpolation. The position of adjacent picture elements is plotted along abscissa K and the luminance signal level along ordinate Y. White circles indicate unprocessed signals of two adjacent picture elements and black circles indicate interpolated signals. Unprocessed signals of the two adjacent picture elements are interpolated in a stepwise and nonlinear manner. By the use of step interpolation, unprocessed signals are converted into sharper signals.

Decoder 8 in Fig. 1 produces a signal for nonlinear interpolation (step) when the output of absolute value detecting circuit 7 is greater than a predetermined value, and produces a signal for linear interpolation when the output is smaller than the predetermined value. In this way, the sharpness of images, such as text for example, comprising signals with large difference in signal levels of picture elements, can be maintained with the use of nonlinear interpolation as seen in Fig. 3. At the same time, the smoothness of images such as lamps, for example, comprising signals with small differences in signal levels, can be attained with the use of linear interpolation as seen in Fig. 2.

Second exemplary embodiment

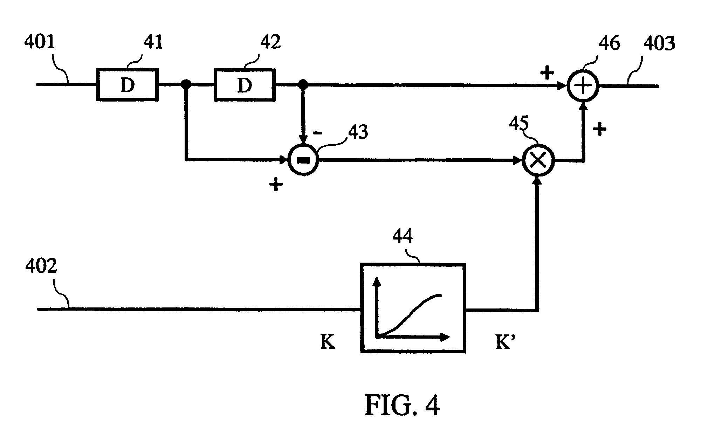

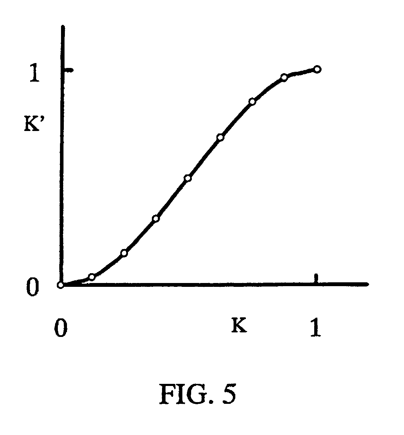

In Fig. 4, delay circuit 41 delays the digital video input signal 401, input from an external source, for a time period representing one picture element, and delay circuit 42 delays the signal for an additional picture element. Subtractor 43 subtracts the output signal of delay circuit 42 from the output signal of delay circuit 41, and produces a signal consisting of the difference in signal levels of the adjacent picture elements. Interpolation coefficient 402 is input from an external source, and decoder 44 converts interpolation coefficient K (K = 0 to 1) by applying the cosine function, and produces a converted interpolation coefficient K' (K' = 0 to 1). Fig. 5 is a graph of the cosine curve as illustrated in the conversion table:

$$K'= 0.5 \cos (\Pi + \Pi K) + 0.5$$

Multiplier 45 multiplies the output of decoder 44 by the output of subtractor 43 which is the difference in signal levels from delay circuits 41 and 42 respectively. Adder 46 adds the output signals of multiplier 45 and delay circuit 42, to produce video output signal 403.

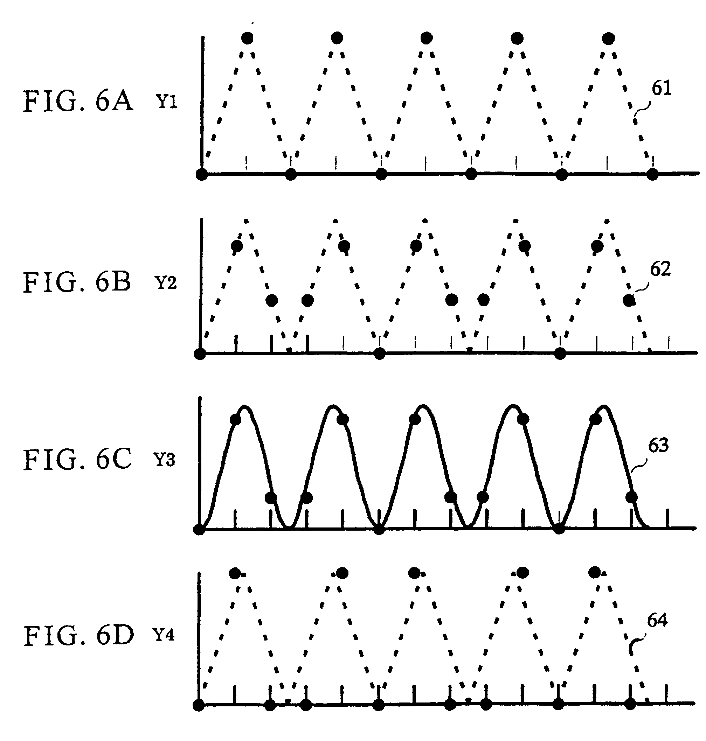

Figs. 6A-6D are conceptual drawings which illustrate the effect on luminance signals when unprocessed signals are converted by 5/4 interpolation employing a range of interpolation methods. In each of Figs. 6A-6D, the same picture element position K is plotted iteratively along the abscissa, and the signal level along the ordinate. Figure 6A shows the signal level of unprocessed luminance signals Y1; Figure 6B shows the luminance signals after linear interpolation (balanced interpolation) Y2; Figure 6C shows the luminance signals after cosine interpolation Y3; and, Figure 6D shows luminance signals after step interpolation Y4. Lines 61, 62, and 64 connect two adjacent unprocessed signals. Curve 63 in Figure 6C interpolates unprocessed signals employing the cosine function. It will be seen by referring to Figs. 6A-6D that the sharpness of images such as text, for example, which have large difference in signal levels of picture elements, can be maintained by nonlinear interpolation, and the smoothness of images such as lamps, for example, which have small differences in signal levels can be assured by linear interpolation.

Display devices employing the present invention enable interpolation for maintaining the sharpness of images when signals having large difference in signal levels of picture elements such as text are input, and for assuring the smoothness of images when signals having small difference in signal levels such as lamps are input. Moreover, image beat can be reduced when high frequency signals such as every other vertical or horizontal line are input.

Although the preferred embodiments refer to a digital luminance signal as a video input signal, they may alternately be component signals such as RGB and YIQ and all other types of signals. The present invention may be practiced or embodied in other ways. The preferred embodiments described herein are therefore illustrative and not restrictive, the scope of the invention being indicated by the appended claims, and all modifications which come within the scope of the claims are intended to be embraced therein.

### Claims

1.  A method for displaying a video signal on a video display monitor, said method comprising the steps of:

    detecting a difference in signal levels of adjacent picture elements of said video signal; interpolating said adjacent picture elements to provide an interpolating picture element, the method used for said interpolating being dependent on the magnitude of said difference in signal levels; and displaying the interpolated video signal on said video display monitor;

    **characterised in that** said video signal is a digital video signal and when said difference in signal levels of said adjacent picture elements is greater than a predetermined value, said interpolating is done on the basis of a converted interpolation coefficient K' derived from an input interpolation coefficient K, K = 0 to 1, where K' = 0.5 cosine $(\Pi + \Pi K)$ + 0.5, and said difference in signal levels of said adjacent picture elements.

2.  A method for displaying a video signal on a video display monitor, said method using interpolation of a new picture element of the video signal between adjacent picture elements of the digital video input signal, said method comprising the steps of:

    detecting a difference in signal levels of said adjacent picture elements; and

displaying an interpolated video signal on said video display;

**characterised in that** said video signal is a digital video signal and said interpolating is done on the basis of a converted interpolation coefficient K' derived from an input interpolation coefficient K, K = 0 to 1 where K' = 0.5 cosine $(\Pi + \Pi K)$ + 0.5, and said detected difference.

3.  A video display monitor for use with a digital video signal comprising:

    delay means (41, 42) for delaying the digital video signal to produce a delayed digital video signal; operation means (43) for calculating a difference in signal levels of the digital video signal and the delayed digital video signal, conversion means (44) for converting an input interpolation coefficient K, K = 0 to 1, into a converted interpolation coefficient K' based on

    i) the equation K' = 0.5 cosine $(\Pi + \Pi K)$ + 0.5, and
    ii) said difference in signal levels calculated by said operation means;

    multiplication means (45) for multiplying an output signal of said conversion means by an output signal of said operation means.; addition means (46) for adding an output signal of said multiplication means (45) and an output signal of said delay means (42); and display means for displaying an output signal of said addition means.

4.  A video display monitor for use with a digital video signal comprising:

    first delay means (1) for delaying the digital video signal; second delay means (2) for further delaying an output signal of said first delay means (1); first operation means (4) for calculating a first difference in the output signal of the first delay means (1) and an output signal of the second delay means (2); third delay means (5) for further delaying an output signal of said first operation means (4); second operation means (6) for calculating a second difference in the output signal of said first operation means (4) and an output signal of said third delay means (5); determining means (7) for determining an absolute value of an output signal of said second operation means (6); selection means (8) for converting an input interpolation coefficient K, K= 0 to 1, into a converted interpolation coefficient K', where K' = 0.5 cosine ($\Pi + \Pi$ K) + 0.5;
multiplication means (9) for multiplying an output of said selection means (8) by the output of said third delay means (5);
fourth delay means (3) for further delaying the output signal of said second delay means (2);
addition means (10) for adding an output signal of said fourth delay means (3) and an output signal of said multiplication means (9); and
display means for displaying an output signal of said addition means.

5. A video display monitor for use with a digital video signal comprising:

   first delay means (41) for delaying the digital video signal;
   second delay means (42) for further delaying an output of said first delay means (1);
   operation means (43) for calculating the difference in the output signal of said first delay means (41) and an output signal of said second delay means (42);
   selection means (44) for converting an input interpolation coefficient K, K = 0 to 1, into a converted interpolation coefficient K', where K' = 0.5 cosine ($\Pi + \Pi$K) + 0.5;
   multiplication means (45) for multiplying an output of said selection means (44) by an output of said operation means (43);
   addition means (46) for adding the output signal of said second delay means (42) and an output signal of said multiplication means (45); and
   display means for displaying an output signal of said addition means.

## Patentansprüche

1. Verfahren zum Anzeigen eines Videosignals auf einem Videoanzeige-Monitor, wobei das Verfahren die folgenden Schritte umfasst:

   Erfassen einer Differenz der Signalpegel aneinandergrenzender Bildelemente des Videosignals;

   Interpolieren der aneinandergrenzenden Bildelemente, um ein Interpolations-Bildelement zu erzeugen, wobei das zum Interpolieren eingesetzte Verfahren von dem Betrag der Differenz der Signalpegel abhängt; und

   Anzeigen des interpolierten Videosignals auf dem Vdeoanzeige-Monitor;

**dadurch gekennzeichnet, dass** es sich bei dem Videosignal um ein digitales Videosignal handelt, und, wenn die Differenz der Signalpegel der aneinandergrenzenden Bildelemente größer ist als ein vorgegebener Wert, das Interpolieren auf der Grundlage eines umgewandelten Interpolationskoeffizienten K', der von einem eingegebenen Interpolationskoeffizienten K, K = 0 bis 1, hergeleitet wird, wobei K' = 0,5 cos ($\pi + \pi$K) + 0,5, und der Differenz der Signalpegel der aneinandergrenzenden Bildelemente ausgeführt wird.

2. Verfahren zum Anzeigen eines Videosignals auf einem Videoanzeige-Monitor, wobei bei dem Verfahren die Interpolation eines neuen Bildelementes des Videosignals zwischen aneinandergrenzenden Bildelementen des digitalen Video-Eingangssignals genutzt wird und wobei das Verfahren die folgenden Schritte umfasst:

   Erfassen einer Differenz der Signalpegel der aneinandergrenzenden Bildelemente; und
   Anzeigen eines interpolierten Videosignals auf der Videoanzeige;

   **dadurch gekennzeichnet, dass** es sich bei dem Videosignal um ein digitales Videosignal handelt und das Interpolieren auf der Grundlage eines umgewandelten Interpolationskoeffizienten K', der von einem eingegebenen Interpolationskoeffizienten K, K = 0 bis 1, hergeleitet wird, wobei K' = 0,5 cos ($\pi + \pi$K) + 0,5, und der erfassten Differenz ausgeführt wird.

3. Videoanzeige-Monitor zum Einsatz mit einem digitalen Videosignal, der umfasst:

   eine Verzögerungseinrichtung (41, 42), die das digitale Videosignal verzögert, um ein verzögertes digitales Videosignal zu erzeugen;

   eine Operationseinrichtung (43), die eine Differenz der Signalpegel des digitalen Videosignals und des verzögerten digitalen Videosignals errechnet,

   eine Umwandlungseinrichtung (44), die einen eingegebenen Interpolationskoeffizienten K, K = 0 bis 1, auf folgender Grundlage in einen umgewandelten Interpolationskoeffizienten K' umwandelt:

   a) der Gleichung K' = 0,5 cos ($\pi + \pi$K) + 0,5, und

   b) der Differenz der Signalpegel, die durch die Operationseinrichtung errechnet wird;

eine Multiplikationseinrichtung (45), die ein Ausgangssignal der Umwandlungseinrichtung mit einem Ausgangssignal der Operationseinrichtung multipliziert;

eine Additionseinrichtung (46), die ein Ausgangssignal der Multiplikationseinrichtung (45) und ein Ausgangssignal der Verzögerungseinrichtung (42) addiert; und

eine Anzeigeeinrichtung, die ein Ausgangssignal der Additionseinrichtung anzeigt.

4. Videoanzeige-Monitor zum Einsatz mit einem digitalen Videosignal, der umfasst:

eine erste Verzögerungseinrichtung (1), die das digitale Videosignal verzögert;

eine zweite Verzögerungseinrichtung (2), die ein Ausgangssignal der ersten Verzögerungseinrichtung (1) weiter verzögert;

eine erste Operationseinrichtung (4), die eine erste Differenz des Ausgangssignals der ersten Verzögerungseinrichtung (1) und des Ausgangssignals der zweiten Verzögerungseinrichtung (2) errechnet;

eine dritte Verzögerungseinrichtung (5), die ein Ausgangssignal der ersten Operationseinrichtung (4) weiter verzögert;

eine zweite Operationseinrichtung (6), die eine zweite Differenz des Ausgangssignals der ersten Operationseinrichtung (4) und ein Ausgangssignal der dritten Verzögerungseinrichtung (5) errechnet;

eine Bestimmungseinrichtung (7), die einen Absolutwert eines Ausgangssignals der zweiten Operationseinrichtung (6) bestimmt;

eine Auswähleinrichtung (8), die einen eingegebenen Interpolationskoeffizienten K, K = 0 bis 1, in einen umgewandelten Interpolationskoeffizienten K' umwandelt, wobei K' = 0,5 cos $(\pi + \pi K)$ + 0,5;

eine Multiplikationseinrichtung (9), die einen Ausgang der Auswähleinrichtung (8) mit dem Ausgang der dritten Verzögerungseinrichtung (5) multipliziert;

eine vierte Verzögerungseinrichtung (3), die das Ausgangssignal der zweiten Verzögerungseinrichtung (2) weiter verzögert;

eine Additionseinrichtung (10), die ein Ausgangssignal der vierten Verzögerungseinrichtung (3) und ein Ausgangssignal der Multiplikationseinrichtung (9) addiert; und

eine Anzeigeeinrichtung, die ein Ausgangssignal der Additionseinrichtung anzeigt.

5. Videoanzeige-Monitor zum Einsatz mit einem digitalen Videosignal, der umfasst:

eine erste Verzögerungseinrichtung (41), die das digitale Videosignal verzögert;

eine zweite Verzögerungseinrichtung (42), die einen Ausgang der ersten Verzögerungseinrichtung (1) weiter verzögert;

eine Operationseinrichtung (43), die die Differenz des Ausgangssignals der ersten Verzögerungseinrichtung (41) und eines Ausgangssignals der zweiten Verzögerungseinrichtung (42) errechnet;

eine Auswähleinrichtung (44), die einen eingegebenen Interpolationskoeffizienten K, K = 0 bis 1, in einen umgewandelten Interpolationskoeffizienten K' umwandelt, wobei K' = 0,5 cos $(\pi + \pi K)$ + 0,5;

eine Multiplikationseinrichtung (45), die einen Ausgang der Auswähleinrichtung (44) mit einem Ausgang der Operationseinrichtung (43) multipliziert;

eine Additionseinrichtung (46), die das Ausgangssignal der zweiten Verzögerungseinrichtung (42) und ein Ausgangssignal der Multiplikationseinrichtung (45) addiert; und

eine Anzeigeeinrichtung, die ein Ausgangssignal der Additionseinrichtung anzeigt.

**Revendications**

1. Procédé pour afficher un signal vidéo sur un moniteur d'affichage vidéo, ledit procédé comprenant les étapes de :

détection d'une différence en termes de niveaux de signal d'éléments d'image adjacents dudit signal vidéo ;
interpolation desdits éléments d'image adjacents afin de produire un élément d'image d'interpolation, le procédé utilisé pour ladite interpolation dépendant de l'amplitude de ladite différence en termes de niveaux de signal ;

affichage du signal vidéo interpolé sur ledit moniteur d'affichage vidéo,

**caractérisé en ce que** ledit signal vidéo est un signal vidéo numérique et lorsque ladite différence en termes de niveaux de signal desdits éléments d'image adjacents est supérieure à une valeur prédéterminée, ladite interpolation est réalisée sur la base d'un coefficient d'interpolation converti K' qui est dérivé à partir d'un coefficient d'interpolation d'entrée K, K = 0 à 1, où K' = 0,5 cosinus ($\pi$ + $\pi$ K) + 0,5, et à partir de ladite différence en termes de niveaux de signal desdits éléments d'image adjacents.

2.   Procédé pour afficher un signal vidéo sur un moniteur d'affichage vidéo, ledit procédé utilisant une interpolation d'un nouvel élément d'image du signal vidéo entre des éléments d'image adjacents du signal d'entrée vidéo numérique, ledit procédé comprenant les étapes de :

détection d'une différence en termes de niveaux de signal desdits éléments d'image adjacents ; et
affichage d'un signal vidéo interpolé sur ledit affichage vidéo,

**caractérisé en ce que** ledit signal vidéo est un signal vidéo numérique et ladite interpolation est réalisée sur la base d'un coefficient d'interpolation converti K' qui est dérivé à partir d'un coefficient d'interpolation d'entrée K, K = 0 à 1, où K' = 0,5 cosinus ($\pi$ + $\pi$K) + 0,5, et à partir de ladite différence détectée.

3.   Moniteur d'affichage vidéo pour une utilisation avec un signal vidéo numérique, comprenant :

un moyen de retard (41, 42) pour retarder le signal vidéo numérique afin de produire un signal vidéo numérique retardé ;
un moyen d'opération (43) pour calculer une différence en termes de niveaux de signal du signal vidéo numérique et du signal vidéo numérique retardé ;
un moyen de conversion (44) pour convertir un coefficient d'interpolation d'entrée K, K = 0 à 1, selon un coefficient d'interpolation converti K' sur la base de :

i) l'équation K' = 0,5 cosinus ($\pi$ + $\pi$ K) + 0,5, et

ii) ladite différence en termes de niveaux de signal comme calculée par ledit moyen d'opération ;

un moyen de multiplication (45) pour multiplier un signal de sortie dudit moyen de conversion par un signal de sortie dudit moyen d'opération ;
un moyen d'addition (46) pour additionner un signal de sortie dudit moyen de multiplication (45) et un signal de sortie dudit moyen de retard (42) ; et
un moyen d'affichage pour afficher un signal de sortie dudit moyen d'addition.

4.   Moniteur d'affichage vidéo pour une utilisation avec un signal vidéo numérique, comprenant :

un premier moyen de retard (1) pour retarder le signal vidéo numérique ;
un second moyen de retard (2) pour retarder de manière supplémentaire un signal de sortie dudit premier moyen de retard (1) ;
un premier moyen d'opération (4) pour calculer une première différence dans le signal de sortie du premier moyen de retard (1) et dans un signal de sortie du second moyen de retard (2) ;
un troisième moyen de retard (5) pour retarder de manière supplémentaire un signal de sortie dudit premier moyen d'opération (4) ;
un second moyen d'opération (6) pour calculer une seconde différence dans le signal de sortie dudit premier moyen d'opération (4) et dans un signal de sortie dudit troisième moyen de retard (5) ;
un moyen de détermination (7) pour déterminer une valeur absolue d'un signal de sortie dudit second moyen d'opération (6) ;
un moyen de sélection (8) pour convertir un coefficient d'interpolation d'entrée K, K = 0 à 1, selon un coefficient d'interpolation converti K', où K' = 0,5 cosinus ($\pi$ + $\pi$ K) + 0,5 ;
un moyen de multiplication (9) pour multiplier une sortie dudit moyen de sélection (8) par la sortie dudit troisième moyen de retard (5) ;
un quatrième moyen de retard (3) pour retarder de manière supplémentaire le signal de sortie dudit second moyen de retard (2) ;
un moyen d'addition (10) pour additionner un signal de sortie dudit quatrième moyen de retard (3) et un signal de sortie dudit moyen de multiplication (9) ; et
un moyen d'affichage pour afficher un signal de sortie dudit moyen d'addition.

5.   Moniteur d'affichage vidéo pour une utilisation avec un signal vidéo numérique, comprenant :

un premier moyen de retard (41) pour retarder le signal vidéo numérique ;
un second moyen de retard (42) pour retarder de manière supplémentaire un signal de sortie dudit premier moyen de retard (41) ;

un moyen d'opération (43) pour calculer la différence dans le signal de sortie dudit premier moyen de retard (41) et dans un signal de sortie dudit second moyen de retard (42) ;

un moyen de sélection (44) pour convertir un coefficient d'interpolation d'entrée K, K = 0 à 1, selon un coefficient d'interpolation converti K', où K' = 0,5 cosinus $(\pi + \pi K) + 0,5$ ;

un moyen de multiplication (45) pour multiplier une sortie dudit moyen de sélection (44) par une sortie dudit moyen d'opération (43) ;

un moyen d'addition (46) pour additionner le signal de sortie dudit second moyen de retard (42) et un signal de sortie dudit moyen de multiplication (45) ; et

un moyen d'affichage pour afficher un signal de sortie dudit moyen d'addition.

FIG. 1

FIG. 2

FIG. 3

FIG. 4

FIG. 5

FIG. 6A  Y1

61

FIG. 6B  Y2

62

FIG. 6C  Y3

63

FIG. 6D  Y4

64

FIG. 7

EP 0 863 665 B1